# EUROPEAN PATENT APPLICATION

(11) **EP 4 852 452 A1**
(43) Date of publication of application: **09.12.2026**
(21) Application number: 26169410.3
(22) Date of filing: 31.03.2026
(51) Int. Cl.: H04R 5/04, G10L 19/008, G10L 19/16, H04S 3/00

(54) **AUDIO SIGNAL PROCESSING METHOD AND APPARATUS, ELECTRONIC DEVICE, AND STORAGE MEDIUM**

(30) Priority: 05.06.2025 CN 202510749488
(71) Applicant: Beijing Zitiao Network Technology Co., Ltd., Beijing 100190 (CN)
(72) Inventor: LIN, Kunpeng, Beijing, 100028 (CN); BU, Bing, Beijing, 100028 (CN); ZHANG, Dejun, Beijing, 100028 (CN); XIAO, Yijian, Beijing, 100028 (CN)
(74) Representative: Isarpatent

(57) **Abstract**

Provided are an audio signal processing method and apparatus, an electronic device, and a storage medium. The audio signal processing method includes: (S10) performing a conversion between an audio signal and a code stream of the audio signal, wherein the audio signal includes stereo audio; wherein the code stream includes a plurality of code stream data frames, each code stream data frame conforms to a format rule, and the format rule specifies that: the code stream data frame includes first header information, second header information, and frame data, the first header information includes frame header information of the code stream data frame, the frame data includes a first encoding part and a second encoding part; and wherein, in response to the audio signal further including spatial audio that includes a plurality of frames of spatial audio signals, the format rule further specifies that the plurality of code stream data frames are also in a one-to-one correspondence with the plurality of frames of spatial audio signals, the second header information includes supplementary information for supplementing the frame header information and related to a frame of spatial audio signal corresponding to the code stream data frame.

## Description

### TECHNICAL FIELD

Embodiments of the present disclosure relate to the technical field of audio processing and, in particular, to an audio signal processing method and apparatus, an electronic device, and a non-transitory computer-readable storage medium.

### BACKGROUND

With the continuous evolution of audio technologies, spatial audio technology (also referred to as three-dimensional audio technology) has become a representative frontier technology in the audio field. The spatial audio technology breaks the plane limitation of audio and is capable of realizing sound rendering in a three-dimensional space form, thereby enhancing the immersion and realness of a listener. The spatial audio technology has also been involved in numerous application scenarios in various fields.

Spatial video capturing is one of the current important audio and video characteristic functions of electronic devices, such as XR (Extended Reality) devices and mobile phones. As one of the key parts of an immersive experience of a spatial video, spatial audio recording may bring information such as a sense of space and orientation, thereby bringing a more contagious presence and personalized interaction experience to a user. The spatial audio technology is mainly based on a spatial audio signal for sound rendering. A common dual-audio-channel stereo audio generally provides a sound field in left and right directions but lacks height and depth information. In contrast, the spatial audio signal includes X audio channels, where X is a positive integer greater than 2. For example, based on the omnidirectional three-dimensional audio technology, the spatial audio is capable of recording sound information from all directions (360° horizontal + vertical), thereby providing an immersive experience of a three-dimensional space.

### SUMMARY

At least one embodiment of the present disclosure provides an audio signal processing method, including: performing a conversion between an audio signal and a code stream of the audio signal, where the audio signal includes stereo audio; where the code stream includes multiple code stream data frames, the stereo audio includes multiple frames of stereo audio signals, the multiple code stream data frames are in a one-to-one correspondence with the multiple frames of stereo audio signals, each code stream data frame conforms to a format rule, and the format rule specifies that: the code stream data frame includes first header information, second header information, and frame data, the first header information includes frame header information of the code stream data frame, the frame data includes a first encoding part and a second encoding part, and the first encoding part includes an encoding load corresponding to a frame of stereo audio signal corresponding to the code stream data frame; and where in response to the audio signal further including spatial audio including multiple frames of spatial audio signals, the format rule further specifies that the multiple code stream data frames are also in a one-to-one correspondence with the multiple frames of spatial audio signals, the second header information includes supplementary information for supplementing the frame header information and related to a frame of spatial audio signal corresponding to the code stream data frame, and the second encoding part includes an encoding load corresponding to the frame of spatial audio signal.

At least one embodiment of the present disclosure provides an audio signal processing method, including: receiving the code stream generated according to the audio signal processing method described in any one of the embodiments of the present disclosure; parsing the code stream to obtain the first header information and the second header information in the code stream data frame; parsing the second header information to determine whether to decode the second encoding part to obtain the frame of spatial audio signal; in response to determining to perform an operation of decoding the second encoding part to obtain the frame of spatial audio signal, decoding the second encoding part according to the second header information to obtain the frame of spatial audio signal; and in response to determining not to perform the operation of decoding the second encoding part to obtain the frame of spatial audio signal, decoding the first encoding part according to the first header information to obtain the frame of stereo audio signal.

At least one embodiment of the present disclosure provides an audio signal processing apparatus, including: a conversion module configured to perform a conversion between an audio signal and a code stream of the audio signal, where the audio signal includes stereo audio; where the code stream includes multiple code stream data frames, the stereo audio includes multiple frames of stereo audio signals, the multiple code stream data frames are in a one-to-one correspondence with the multiple frames of stereo audio signals, each code stream data frame conforms to a format rule, and the format rule specifies that the code stream data frame includes first header information, second header information, and frame data, the first header information includes frame header information of the code stream data frame, the frame data includes a first encoding part and a second encoding part, and the first encoding part includes an encoding load corresponding to a frame of stereo audio signal corresponding to the code stream data frame; and where in response to the audio signal further including spatial audio including multiple frames of spatial audio signals, the format rule further specifies that the multiple code stream data frames are also in a one-to-one correspondence with the multiple frames of spatial audio signals, the second header information includes supplementary information for supplementing the frame header information and related to a frame of spatial audio signal corresponding to the code stream data frame, and the second encoding part includes an encoding load corresponding to the frame of spatial audio signal.

At least one embodiment of the present disclosure provides an audio signal processing apparatus, including: a receiving module configured to receive the code stream generated according to the audio signal processing method described in any one of the embodiments of the present disclosure; a parsing module configured to parse the code stream to obtain the first header information and the second header information in the code stream data frame; a determining module configured to parse the second header information to determine whether to decode the second encoding part to obtain the frame of spatial audio signal; a first decoding module configured to, in response to determining to perform an operation of decoding the second encoding part to obtain the frame of spatial audio signal, decode the second encoding part according to the second header information to obtain the frame of spatial audio signal; and a second decoding module configured to, in response to determining not to perform the operation of decoding the second encoding part to obtain the frame of spatial audio signal, decode the first encoding part according to the first header information to obtain the frame of stereo audio signal.

At least one embodiment of the present disclosure provides an electronic device, including: a memory storing computer-executable instructions in a non-transitory manner; and a processor configured to run the computer-executable instructions, where when the computer-executable instructions are run by the processor, the audio signal processing method according to any one of the embodiments of the present disclosure is implemented.

At least one embodiment of the present disclosure provides a non-transitory computer-readable storage medium, where the non-transitory computer-readable storage medium stores computer-executable instructions, and when the computer-executable instructions are executed by a processor, the audio signal processing method according to any one of the embodiments of the present disclosure is implemented.

### BRIEF DESCRIPTION OF DRAWINGS

The above and other features, advantages, and aspects of the embodiments of the present disclosure will become more apparent in combination with the drawings and with reference to the following specific embodiments. Throughout the drawings, the same or similar reference numerals denote the same or similar elements. It should be understood that the drawings are schematic and that parts and elements are not necessarily drawn to scale.
Fig. 1A is a diagram of an application scenario according to an embodiment of the present disclosure;
Fig. 1B is a diagram of another application scenario according to an embodiment of the present disclosure;
Fig. 2 is a schematic diagram of an audio signal processing method according to at least one embodiment of the present disclosure;
Fig. 3 is a schematic diagram of a format rule of a code stream according to at least one embodiment of the present disclosure;
Fig. 4 is a schematic structural diagram of second header information according to at least one embodiment of the present disclosure;
Fig. 5 is a schematic structural diagram of a second encoding part according to at least one embodiment of the present disclosure;
Fig. 6 is a schematic diagram of an encoding process according to at least one embodiment of the present disclosure;
Fig. 7 is a schematic flowchart of an audio signal processing method according to at least one embodiment of the present disclosure;
Fig. 8 is a schematic structural diagram of an audio signal processing apparatus according to at least one embodiment of the present disclosure;
Fig. 9 is a schematic structural diagram of an audio signal processing apparatus according to at least one embodiment of the present disclosure;
Fig. 10 is a schematic block diagram of an electronic device according to an embodiment of the present disclosure; and
Fig. 11 is a schematic diagram of a non-transitory computer-readable storage medium according to at least one embodiment of the present disclosure.

### DETAILED DESCRIPTION

The embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. On the contrary, these embodiments are provided for a more thorough and complete understanding of the present disclosure. It should be understood that the drawings and embodiments of the present disclosure are only for exemplary purposes, and are not intended to limit the protection scope of the present disclosure.

Unless otherwise defined, the technical or scientific terms used in the present disclosure shall have general meanings as understood by those of ordinary skill in the art to which the present disclosure belongs. "First", "second", and like words used in the present disclosure do not represent any order, quantity, or importance, but are merely used to distinguish between different components. "Include" or "include" or like words mean that an element or item preceding the term encompasses an element or item or its equivalent listed after the term, without excluding other elements or items. "Connect" or "connected" or like words are not limited to physical or mechanical connection, but may include electrical connection, whether direct or indirect. "Up", "down", "left", "right", and the like are only used to represent a relative positional relationship, and when an absolute position of the described object changes, the relative positional relationship may also change accordingly. In order to keep the following description of the embodiments of the present disclosure clear and concise, the present disclosure omits detailed description of some known functions and known components.

It may be understood that before using the technical solutions disclosed in the embodiments of the present disclosure, the user shall be informed of the type, range of use, use scenarios, etc., of personal information involved in the present disclosure in an appropriate manner and obtain the authorization of the user in accordance with relevant laws and regulations.

For example, in response to receiving an active request from a user, prompt information is sent to the user to clearly prompt the user that the requested operation will require access to and use of personal information of the user. As such, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to receiving the active request from the user, the prompt information may be sent to the user in the form of, for example, a pop-up window, in which the prompt information may be presented in text. Furthermore, the pop-up window may also include a selection control for the user to select whether to "agree" or "disagree" to provide the personal information to the electronic device.

It may be understood that the above process of notifying and obtaining user authorization is only illustrative and does not limit the implementations of the present disclosure, and other methods that satisfy relevant laws and regulations may also be applied in the implementations of the present disclosure.

For ease of understanding the embodiments of the present disclosure, the technical terms involved are first explained here.

Opus: a mature lossy encoder that supports a maximum encoding expected bit rate of 510 kbps for input, is suitable for real-time communication, and uses linear predictive coding at low bit rates and transform coding at high bit rates.

AAC (Advanced Audio Coding): AAC is an audio encoding standard defined by the MPEG-2 and MPEG-4 standards, and is designed to provide higher audio quality and lower bit rate than MP3. AAC uses a block-based encoding method to divide an audio signal into small blocks for processing. It uses a psychoacoustic model to reduce audio components that are less sensitive to human ears, thereby achieving efficient compression.

Code stream: a code stream of an audio signal is an output form of audio data after encoding compression. The encoding process converts an original audio signal (usually a continuous analog signal or a digital signal with a high sampling rate) into a compact binary data stream for storage or transmission under limited storage space or bandwidth.

Code stream data frame/a frame of code stream data: original audio may be divided into multiple frames of audio data. During encoding, the audio data is encoded frame by frame, and each frame of encoded audio data corresponds to one code stream data frame. A code stream includes multiple code stream data frames. Encapsulation format of each code stream data frame may be different according to different encoders. The code stream data is used for audio data transmission and storage. For example, for an AAC encoder, one ADTS (Audio Data Transport Stream) frame may be regarded as one code stream data frame, and each code stream data frame may be independently decoded.

Code stream structure: the code stream data frame is stored according to a certain data structure, and the data structure is a code stream structure. Generally, the code stream structure includes at least a frame header field and a data field. The frame header field is used to store parameters such as the length, encoding bandwidth, and number of audio channels of the code stream data frame, and the data field is used to store encoded audio data. A receiver obtains the meaning and length of each field of the code stream structure, thereby parsing the code stream data frame and playing the audio.

Decoding: a decoder is used to decode an encoding load (or an audio feature obtained through parsing) corresponding to an audio signal. The decoding is used to restore the encoding load corresponding to the audio signal to the audio signal.

Parsing: parsing a code stream according to a format rule to extract corresponding data content therefrom. For example, when an encoding load is extracted, the parsing process only involves extracting an audio feature of the encoding load, and does not involve a process of using a decoder to restore the encoding load to an audio signal.

Current spatial audio recording usually involves separately collecting stereo audio and spatial audio. The stereo audio uses two microphones or speakers to simulate horizontal sound localization, providing a sound field in left and right directions. The spatial audio is, for example, a collected FOA (First Order Ambisonics) signal. The FOA signal is the most basic Ambisonics format, which uses four microphones (W, X, Y, Z) to record sound, requires dedicated microphones and software processing, and cannot be directly played by ordinary devices; and instead needs to be rendered into a binaural or surround sound format.

For example, the stereo audio is encoded using an independent format, and the spatial audio is encoded using another independent format. Usually, the stereo audio is encoded by a traditional encoder, such as Opus or AAC, and the spatial audio is encoded, for example, using the APAC (Apple Positional Audio Codec) format or a modified traditional encoder. Two channels of collected signals are encoded and sent using two independent code streams, respectively. For a device that does not have the decoding capability for the spatial audio, such as a device that does not support APAC or the modified traditional encoder, a traditional decoder may be used to decode the stereo audio for a basic experience, and for a device that has the decoding capability for the spatial audio, the spatial audio may be decoded in a corresponding format for an optimal experience. In this way, both the immersion after decoding between devices of the same type and the basic compatibility between third-party devices are ensured.

APAC encoding is not compatible with the AAC encoder and is not open to the public, and the above dual-code stream solution is adopted to ensure compatibility. For some devices that do not support the APAC encoding format, a traditional encoder in the industry, such as AAC or OPUS, is usually selected to separately encode the stereo audio and the spatial audio. Since these encoders are not optimized for spatial audio, the traditional encoder needs to be modified and adapted to encode the spatial audio. For example, a standard AAC encoder is used for cross-platform sharing to ensure a basic experience on third-party devices, while the modified traditional encoder is used on devices of the same type, thereby obtaining an optimal experience on the device platform of the same type.

As described above, the stereo audio and the spatial audio are respectively encoded by the traditional encoder, and two channels of code streams are used to send the encoded audio to a decoding-end device. When the encoded audio is sent to a third-party device (which does not have the modified traditional encoder and thus does not have the decoding capability for the spatial audio), a player needs to select a stereo audio track to ensure compatibility. However, since the modified traditional encoder is used for the spatial audio, the third-party device may recognize the spatial audio as an audio signal encoded by the traditional encoder and directly use the traditional encoder to decode the spatial audio. However, the modified traditional encoder is not available on the third-party device, which results in errors in the order and orientation of the spatial audio, causing a poor experience.

At least one embodiment of the present disclosure provides an audio processing method, an apparatus, an electronic device, and a storage medium. The audio processing method includes: performing a conversion between an audio signal and a code stream of the audio signal, where the audio signal includes stereo audio; where the code stream includes multiple code stream data frames, the stereo audio includes a plurality of frames of stereo audio signals (i.e., a plurality of stereo audio signal frames), the plurality of code stream data frames are in a one-to-one correspondence with the plurality of frames of stereo audio signals, each code stream data frame (i.e., each frame of code stream data) conforms to a format rule, and the format rule specifies that the code stream data frame includes first header information, second header information, and frame data, the first header information includes frame header information of the code stream data frame, the frame data includes a first encoding part and a second encoding part, and the first encoding part includes an encoding load corresponding to a frame of stereo audio signal corresponding to the code stream data frame; and where in response to the audio signal further including spatial audio including a plurality of frames of spatial audio signals (i.e., a plurality of spatial audio signal frames), the format rule further specifies that the a plurality of code stream data frames are also in a one-to-one correspondence with the plurality of frames of spatial audio signals, the second header information includes supplementary information for supplementing the frame header information and related to a frame of spatial audio signal corresponding to the code stream data frame, and the second encoding part includes an encoding load corresponding to the frame of spatial audio signal.

The audio processing method provided by at least one embodiment of the present disclosure provides a compatible audio encoding method, in which one code stream may be used to transmit stereo audio, or one code stream may be used to transmit both stereo audio and spatial audio, thereby realizing audio code stream transmission with a single code stream and dual signals, and realizing multi-purpose with one stream. Moreover, the generated code stream is completely compatible with the encoder encoding the stereo audio, and the decoder may directly decode the stereo audio, and the audio quality is basically the same as the decoding quality of the traditional stereo audio. For a device that may recognize the spatial audio, only the spatial audio may be decoded, while on other third-party devices, only the stereo audio may be recognized, and there will be no confusion problem of the third-party device recognizing dual-track audio.

The audio signal processing method provided by the embodiment of the present disclosure may be performed by an audio processing apparatus and may be applied to an application scenario of encoding and decoding audio. For example, the audio may include only stereo audio or may include both stereo audio and spatial audio. For example, the audio signal processing method may be used for network audio transmission scenarios such as online music platforms and internet radio, or scenarios such as audio storage, audio playback on mobile devices, and audio playback on games, which is not specifically limited in the present disclosure. For example, the audio processing apparatus may be implemented by software and/or hardware, and may generally be integrated in an electronic device. The electronic device may be a mobile device, such as a mobile phone, a smart watch, a tablet computer, or a personal digital assistant, or may be other devices, such as a desktop computer.

For example, in one embodiment, the audio signal includes the stereo audio and the spatial audio, and the audio processing method may be used for audio recording and playing in spatial video capturing, for example, in an electronic device such as an XR (Extended Reality) device or a mobile phone.

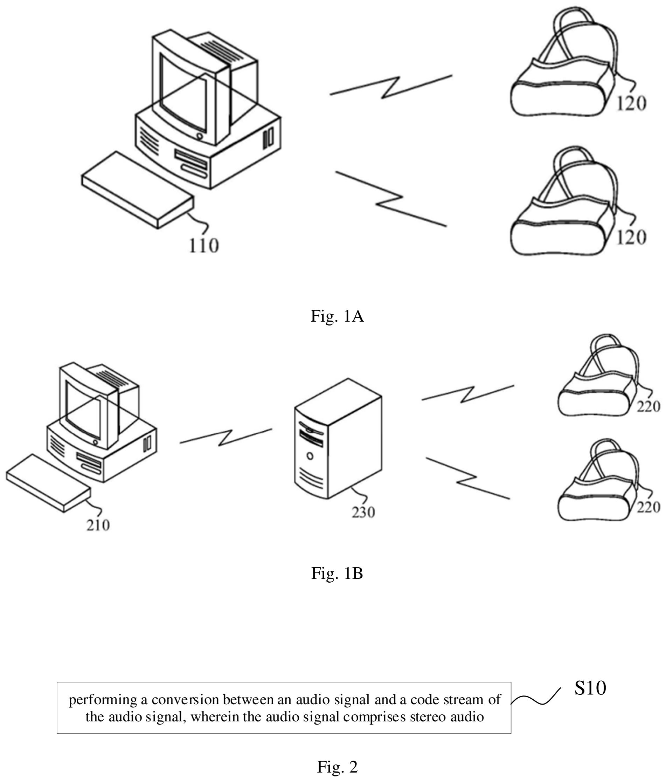

Exemplarily, Fig. 1A is a diagram of an application scenario according to an embodiment of the present disclosure. As shown in Fig. 1A, a first terminal 110 may communicate with a plurality of second terminals 120. It should be understood that the number of the first terminal and the number of the second terminals in Fig. 1A are only illustrative, and in practice, any number of first terminals and second terminals may be provided as required by the actual situation, which is not limited in the present application. For example, in one embodiment, the first terminal encodes original audio using the audio processing method provided by at least one embodiment of the present disclosure, and then sends the encoded audio to the second terminal 120, so that the second terminal 120 decodes the received code stream using the audio processing method provided by at least one embodiment of the present disclosure to obtain a restored audio signal.

Exemplarily, Fig. 1B is a diagram of another application scenario according to an embodiment of the present disclosure. As shown in Fig. 1B, a first terminal 210 may communicate with a target server 230, and the target server 230 may communicate with a plurality of second terminals 220.

It should be understood that the number of the first terminal, the number of the target servers, and the number of the second terminals in Fig. 1B are only illustrative, and in practice, any number of first terminals, target servers, and second terminals may be provided as required by the actual situation, which is not limited in the present application.

In some implementable manners, the first terminal 110 in Fig. 1A and the first terminal 210 in Fig. 1B may each be a mobile phone, a tablet computer, a laptop computer, a desktop computer, etc., but are not limited thereto.

In some implementable manners, the second terminal 120 in Fig. 1A and the second terminal 220 in Fig. 1B may each be a VR device, such as a VR headset or VR glasses, that may play video data and audio data, but are not limited thereto.

In some implementable manners, the target server 230 in Fig. 1B may be an independent physical server, a server cluster, or a distributed system composed of a plurality of physical servers, or a cloud server that provides cloud computing services, which is not limited in the present application.

In some implementable manners, the target server 230 and the first terminal 110 may be in the same local area network, but are not limited thereto.

Fig. 2 is a schematic diagram of an audio signal processing method according to at least one embodiment of the present disclosure. As shown in Fig. 2, the audio processing method provided by at least one embodiment of the present disclosure includes step S10.

In step S10, performing a conversion between an audio signal and a code stream of the audio signal, wherein the audio signal comprises stereo audio.

For example, performing the conversion includes encoding the audio signal into the code stream. For example, through processes such as sampling, quantization, and encoding, the audio signal is converted from a continuous analog signal to a binary code stream.

For example, performing the conversion includes decoding the audio signal from the code stream. For example, through processes such as decoding and digital-to-analog conversion, the code stream is restored from a binary code stream to an audio signal.

An execution terminal of the audio signal processing method provided by at least one embodiment of the present disclosure may be considered as a first terminal involved in an audio encoding operation, and the first terminal may preferably be a server or terminal related to audio services.

For example, the audio signal includes stereo audio. The code stream includes a plurality of code stream data frames, the stereo audio includes a plurality of frames of stereo audio signals, and the plurality of code stream data frames are in a one-to-one correspondence with the plurality of frames of stereo audio signals.

For example, each code stream data frame conforms to a format rule, and the format rule specifies that: the code stream data frame includes first header information, second header information, and frame data, the first header information includes frame header information of the code stream data frame, the frame data includes a first encoding part and a second encoding part, and the first encoding part includes an encoding load corresponding to a frame of stereo audio signal corresponding to the code stream data frame.

In response to the audio signal further including spatial audio including a plurality of frames of spatial audio signals, the format rule further specifies that the plurality of code stream data frames are also in a one-to-one correspondence with the plurality of frames of spatial audio signals, the second header information includes supplementary information for supplementing the frame header information and related to a frame of spatial audio signal corresponding to the code stream data frame, and the second encoding part includes an encoding load corresponding to the frame of spatial audio signal.

For example, the stereo audio may be divided into a plurality of frames, for example, the plurality of frames of stereo audio signals according to a time period. Each frame of stereo audio signal is encoded to obtain one code stream data frame, and the plurality of code stream data frames are in a one-to-one correspondence with the plurality of frames of stereo audio signals. Similarly, the spatial audio may also be divided into a plurality of frames, for example, the plurality of frames of spatial audio signals at the same time interval as the stereo audio. The code stream data frame further includes an encoding load corresponding to a frame of spatial audio signal, and the plurality of code stream data frames are in a one-to-one correspondence with the plurality of frames of spatial audio signals.

In the present disclosure, the spatial audio may be considered as an audio signal formed by using three-dimensional audio technology, and the stereo audio may be considered as an audio signal that may be encoded and decoded by a traditional audio encoding and decoding manner. In the present disclosure, the stereo audio and the spatial audio are audio signals collected and generated by using different audio technologies for the audio signal of the same content, and the two have different numbers of audio channels but the same audio content. For example, the stereo audio includes two audio channels, and the spatial audio includes X audio channels, where X is a positive integer greater than 2.

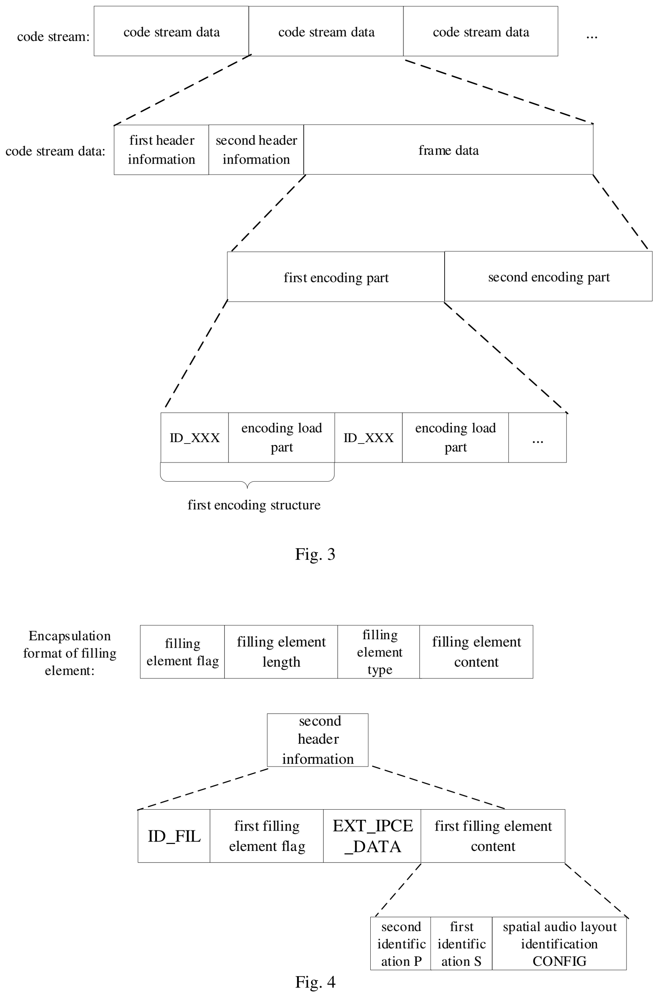

Fig. 3 is a schematic diagram of a format rule of a code stream according to at least one embodiment of the present disclosure.

As shown in Fig. 3, the code stream includes a plurality of code stream data frames, and each code stream data frame includes first header information, second header information, and frame data. The frame data includes a first encoding part and a second encoding part.

The first header information includes frame header information of the code stream data frame. For example, taking an AAC encoder as an example, the code stream data frame may be transmitted using an encapsulation format of an ADTS (Audio Data Transport Stream) frame. The frame header of the ADTS frame describes basic attributes of the frame of audio data, and provides sufficient information for the decoder, so that it may correctly parse and decode a single ADTS frame.

For example, taking the ADTS frame as an example, the first header information may carry information such as a code stream attribute (sampling rate, bandwidth, number of audio channels, etc.) of the stereo audio signal corresponding to the code stream data frame, a flag indicating whether variable bit rate encoding is used, an encoding mode, and a complete frame length. For other encoders, the specific content of the first header information may be adjusted as needed, and details are not described herein again.

For example, the first encoding part includes an encoding load corresponding to a frame of stereo audio signal corresponding to the code stream data frame. For example, as shown in Fig. 3, the first encoding part includes at least one first encoding structure, the encoding load corresponding to the frame of stereo audio signal includes at least one encoding load part in a one-to-one correspondence with the at least one first encoding structure, each first encoding structure includes a flag (ID_XXX) and an encoding load part corresponding to the first encoding structure, the flag indicates a code stream element type of the encoding load part, and the encoding load part includes actual encoded audio data for decoding the audio signal.

For example, taking the AAC encoder as an example, the flag may include, according to the definition, ID_SCE, ID_CPE, ID_CCE, etc. For example, ID_SCE indicates that the encoding load part is a single-channel element, ID_CPE indicates that the encoding load part is a stereo element, and ID_CCE indicates that the encoding load part is a coupled-channel element, which will not be listed one by one here. For enhanced AAC, such as HE-AAC and HE-AAC V2, the audio frame data further includes SBR (Spectral Band Replication) and PS (Parametric Stereo) encoding loads. The flag may be set according to encoding requirements, and the encoding load part following the flag is an encoding load part related to the code stream element type indicated by the flag.

Taking the ADTS frame as an example, an ADTS frame usually includes a frame header and frame data, and the frame data may be functionally divided into audio frame data and extended data. The audio frame data is actual AAC-encoded audio data for decoding the audio signal. The extended data is used to fill some additional extended information other than the audio frame data, such as dynamic range control information and SBR (Spectral Band Replication) information.

In AAC and its enhanced encoder, the extended data usually includes an element whose flag is ID_DSE, ID_PCE, or ID_FIL type. ID_DSE indicates a data stream element, which includes some additional information that does not belong to the audio signal. ID_PCE indicates a program configuration element, which includes some audio channel configuration information. ID_FIL indicates a filling element to transmit extended information. For different flags, the encapsulation formats are slightly different.

For example, the format rule further specifies that the second encoding part and the second header information are both encapsulated in a format indicating serving as an extension part of the code stream data frame.

For example, in AAC and its enhanced encoder, when encapsulating in a format code indicating serving as the extension part of the code stream data frame, the extension part is encapsulated in the format of the filling element, and the code stream structure encapsulated in the format of the filling element includes a filling element flag, a filling element length, a filling element type, and filling element content.

The filling element flag is ID_FIL, and the filling element content may include some custom extended information. For example, when the second encoding part and the second header information are encapsulated in the format indicating serving as the extension part of the code stream data frame, an encapsulation format whose flag is ID_FIL may be specifically used for encapsulation.

Certainly, depending on the encoder, other encoders may also be encapsulated in a format having a similar effect to the filling element. For example, some extended information may be customized as the encapsulation format of the extension part. The data content in the extension part is the extended information, and the extended information may include the filling element content described below, which is not specifically limited in the present disclosure.

In at least one embodiment of the present disclosure, for example, for one stream of stereo audio and one stream of spatial audio collected by a device, after encoding the stereo audio and the spatial audio, the encoding load corresponding to the stereo audio is placed in the first encoding part, which is also a part compatible with the traditional encoder. The encoding load corresponding to the spatial audio is encapsulated in the format indicating serving as the extension part of the code stream data frame to form the second encoding part. The second encoding part is placed in the code stream data frame as the extension part of the first encoding part, so that the stereo audio and the spatial audio may be encapsulated into a complete encoded code stream, realizing multi-purpose with one stream.

For example, in AAC and its enhanced encoder, when encapsulating in the format code indicating serving as the extension part of the code stream data frame, encapsulation is performed in the format of the filling element, and the code stream structure may include the filling element flag (such as ID_FIL), the filling element length, the filling element type, and the filling element content. The filling element length indicates the length of the filling element content, and the encapsulation format of the filling element supports different filling element types.

For example, currently, eight filling element types are defined in the AAC encoder and its enhanced encoder, as shown below:

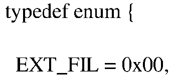

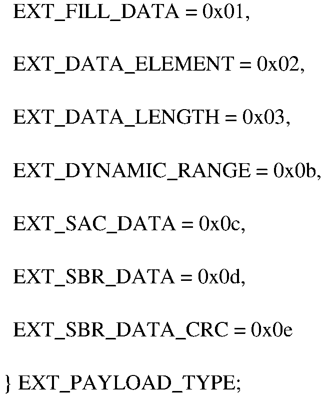

For example, the format indicating the extension part of the code stream data frame specifies that the code stream structure serving as the extension part includes the filling element flag, the filling element length, the filling element type, and the filling element content, that is, the extension part is obtained by encapsulating in the format of the filling element. The filling element flag and the filling element type jointly indicate the data type of the filling element content. For example, the second header information encapsulated in the format of the filling element includes a first filling element flag and a first filling element type, and the second encoding part encapsulated in the format of the filling element includes a second filling element flag and a second filling element type. The format rule further specifies that the first filling element type is different from the second filling element type, and the first filling element flag is the same as the second filling element flag. For example, the second header information as the filling data and the second encoding part, may be distinguished by the filling element flag and the filling element type.

The structures of the second header information and the second encoding part are specifically described below in conjunction with the encapsulation format encapsulated in the format of the filling element.

As described above, the encoder may support a customized extended filling data type. In at least one embodiment of the present disclosure, in addition to still retaining the standard frame header information (that is, the first header information) in the frame header part of the code stream data frame, it is also necessary to add extended supplementary information for supplementing the frame header information after the first header information, for example, including whether the encoding load corresponding to the spatial audio is carried, whether the encoding load corresponding to the spatial audio is decoded, and audio channel layout information of the spatial audio.

Fig. 4 is a schematic structural diagram of second header information according to at least one embodiment of the present disclosure.

For example, as shown in Fig. 4, the code stream structure encapsulated in the format of the filling element includes the filling element flag, the filling element length, the filling element type, and the filling element content.

For example, the second header information includes the first filling element flag, a first filling element length, the first filling element type, and first filling element content. The second header information is thus encapsulated into the code stream data frame in the format of the filling element. Taking the AAC encoder or its enhanced encoder as an example, the second header information may be specifically encapsulated in the format of the filling element, that is, the first filling element flag is ID_FIL.

As shown in Fig. 4, the first filling element flag is a flag ID_FIL indicating that the first filling element content is the filling element of the code stream data frame, for example, with a bit width of 3 bits (bit). The first filling element length indicates the length of the filling element content in the second header information, for example, with a bit width of 4 bits. A new extended data type, that is, the first type, is defined in EXT_PAYLOAD_TYPE, for example, represented as EXT_IPCE_DATA, for example, with a bit width of 4 bits. The first type represents that the extended data is the data type of the second header information.

In at least one embodiment of the present disclosure, since the first filling element type is the first type, which is a newly defined data type in EXT_PAYLOAD_TYPE, this part will not be recognized by a traditional decoder (a third-party device that does not have the capability of decoding spatial audio).

As shown in Fig. 4, the first filling element content includes a first identification S, a second identification P, and a spatial audio layout identification CONFIG.

The first identification S indicates whether the second encoding part is decoded to obtain a frame of spatial audio signal. When the first identification S is a first value (for example, 1), it indicates that only the spatial audio signal is decoded, and when the first identification is a second value (for example, 0), it indicates that only the stereo audio signal is decoded. In this way, through the first identification S in the second header information, it is possible to selectively decode only the stereo audio or the spatial audio, and decode different contents for different situations, which has the flexibility of decoding. Certainly, the first identification S may also have a third value, for example, indicating that both the stereo audio signal and the spatial audio signal are decoded, which is not specifically limited in the present disclosure. It should be noted that, here, "decoding the spatial audio signal" refers to using a decoder to decode the audio feature corresponding to the spatial audio signal to restore the spatial audio signal, and "decoding the stereo audio signal" refers to using a decoder to decode the audio feature corresponding to the stereo audio signal to restore the spatial audio signal.

The second identification P indicates whether the code stream data frame carries the second encoding part including the encoding load corresponding to the frame of spatial audio signal. For example, when the second identification P is the first value, it represents that the code stream data frame carries the second encoding part including the encoding load corresponding to the frame of spatial audio signal, and when the second identification P is the second value, it represents that the code stream data frame does not carry the second encoding part including the encoding load corresponding to the frame of spatial audio signal. Certainly, in some embodiments, the second identification P may not be transmitted or defined in the first filling element content. In this case, it is default that the code stream data frame carries the second encoding part. For example, when the second identification P is the second value, the code stream data frame may not have the second encoding part, or the code stream data frame may have the second encoding part, but the second encoding part includes extended information of a frame of stereo audio signal.

The spatial audio layout identification is used to indicate the audio channel layout of the frame of spatial audio signal. CONFIG is used to indicate the audio channel layout of the frame of spatial audio signal, and is used to transmit the specific layout of the spatial audio signal. For example, the audio channel layout of the spatial audio signal includes a variety of audio channel layouts, such as single-channel, stereo, multi-channel 3.0 (including three independent audio channels), and multi-channel 4.0 (including four independent audio channels), which will not be listed one by one here. Each audio channel layout may have a uniquely corresponding index value, and the index value is represented by using the audio channel layout CONFIG.

For example, the format rule specifies that the second encoding part encapsulated in the format of the filling element includes at least one second encoding structure, and each second encoding structure includes a second filling element flag, a second filling element length, a second filling element type, and second filling element content.

The second filling element type in the at least one second encoding structure is a second type. The second filling element flag in the at least one second encoding structure is a flag indicating that the second filling element content is the filling element of the code stream data frame. The encoding load corresponding to the frame of spatial audio signal includes at least one encoding load part in a one-to-one correspondence with the at least one second encoding structure. The second filling element content in each second encoding structure includes the encoding load part corresponding to the second encoding structure.

For example, a new extended data type, for example, the second type, is defined in EXT_PAYLOAD_TYPE, which may be represented as EXT_SA_DATA. The second type represents that the filling element content part is the data type of the spatial audio signal. The first type is different from the second type to distinguish the second header information from the second encoding part.

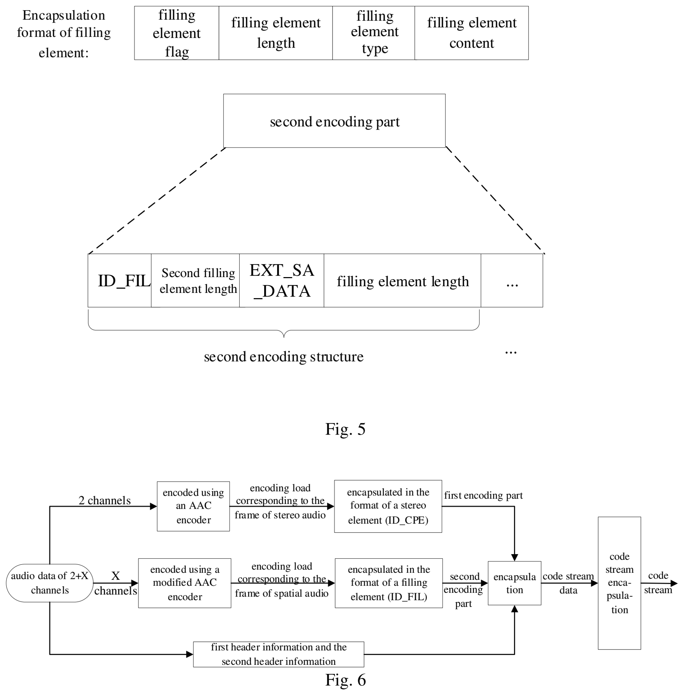

Fig. 5 is a schematic structural diagram of a second encoding part according to at least one embodiment of the present disclosure.

For example, as shown in Fig. 5, the second encoding part includes at least one second encoding structure, and the number of second encoding structures may be set according to encoding requirements. Each second encoding structure may be specifically encapsulated in the format of the filling element. For example, the second encoding structure includes the second filling element flag, the second filling element length, the second filling element type, and the second filling element content. The second encoding part is thus encapsulated into the code stream data frame in the format of the filling element.

Specifically, as shown in Fig. 5, the second filling element flag is the same as the first filling element type in the second header information, and both are flags ID_FIL, indicating that the first filling element content is the filling element of the code stream data frame, for example, with a bit width of 3 bits (bit). The second filling element length indicates the length of the filling element content in the second encoding structure, for example, with a bit width of 4 to 12 bits. A new extended data type, that is, the second type, is defined in EXT_PAYLOAD_TYPE, for example, represented as EXT_SA_DATA, for example, with a bit width of 4 bits. The second type represents that the extended data is the data type of the second encoding part.

In at least one embodiment of the present disclosure, since the second filling element type is the second type, which is a newly defined data type in EXT_PAYLOAD_TYPE, this part will not be recognized by a traditional decoder (third-party device), and the decoder will directly discard the filling element content, ensuring that the third-party device may only recognize the encoding load corresponding to the stereo audio, and avoiding the confusion problem of recognizing dual-track audio in the third-party device.

For example, the encoding load corresponding to the frame of spatial audio signal includes at least one cin a one-to-one correspondence with the at least one second encoding structure. As shown in Fig. 5, the filling element content of the second encoding structure includes the encoding load part corresponding to the second encoding structure.

For example, in the code stream data frame, the first header information, the second header information, the first encoding part, and the second encoding part are arranged in this order: the first header information, the second header information, the first encoding part, and the second encoding part. The code stream is usually decoded sequentially during decoding, and this arrangement order enables correct decoding during decoding.

For example, in some embodiments, the audio signal includes only the stereo audio and does not include the spatial audio. In this case, the frame data includes the first encoding part and the second encoding part, the first encoding part still includes the encoding load corresponding to the stereo audio, the second encoding part includes extended information of a frame of stereo audio signal, and for example, the extended information includes elements whose flags are ID_DSE, ID_PCE, ID_FIL, and other types. In addition, the second header information is still retained in the code stream data frame, the second header information is encapsulated in the format of the filling element of the code stream data frame, the second identification P in the second header information is the second value, the first identification S may be the second value, and the spatial audio layout identification may be filled with a preset value that does not correspond to any audio channel layout, for example, filled with 0.

For example, in some other embodiments, in addition to the stereo audio, the audio signal further includes spatial audio of the same audio content. In this case, the frame data includes the first encoding part and the second encoding part, the second identification P in the second header information is the first value, the second encoding part includes the encoding load corresponding to the frame of spatial audio signal, and for the specific structure, reference may be made to Fig. 5, for example.

In at least one embodiment of the present disclosure, the encoding load corresponding to the stereo audio signal is encapsulated in the format of the stereo element, and the encoding load corresponding to the spatial audio signal is encapsulated in the format of the filling element, so that the two encoding loads are encapsulated into the code stream data frame as a whole. At this time, a third-party device cannot recognize the currently defined extended data type, so the decoder will directly discard the filling element content, ensuring that the third-party device may only recognize the encoding load corresponding to the stereo audio. In this way, on a device of the same type, such as a device with the spatial audio decoding capability, the complete spatial audio may be decoded to obtain an optimal immersive interaction experience. On a third-party device, such as a device without the spatial audio decoding capability, since it cannot recognize the currently defined extended data type, only the stereo audio may be decoded, ensuring the most basic compatibility, and avoiding the confusion problem of recognizing dual-track audio in the third-party device.

Fig. 6 is a schematic diagram of an encoding process according to at least one embodiment of the present disclosure. Fig. 6 shows a scenario of using an AAC encoder. The encoding process of the audio processing method provided by at least one embodiment of the present disclosure is specifically described below with reference to Fig. 6.

As shown in Fig. 6, first, audio data of 2+X channels (audio channels) is acquired by means of signal collection or the like, where the audio data of 2 channels represents stereo audio, and the audio data of X channels represents spatial audio.

For example, the stereo audio is encoded using an AAC encoder, and the obtained encoding load corresponding to the frame of stereo audio is encapsulated in the format of a stereo element (ID_CPE) to obtain the first encoding part of each piece of code stream data frame, which is specifically as described above and will not be repeated here. The spatial audio is also encoded using a modified AAC encoder, and the encoding load corresponding to the frame of spatial audio is encapsulated in the format of a filling element (ID_FIL) to obtain the second encoding part of each piece of code stream data frame, which is specifically as described above and will not be repeated here.

After that, the first encoding part, the second encoding part, and the first header information and the second header information obtained based on the audio data are encapsulated according to the format rule described above to generate each piece of code stream data frame, and the code stream data frame is encapsulated into a code stream to finally obtain the code stream transmitted to the decoder.

In the audio signal processing method provided by at least one embodiment of the present disclosure, a compatible code stream generation solution is provided, in which the stereo audio and the spatial audio are simultaneously transmitted based on sending a single code stream. The generated code stream is completely compatible with an existing encoder, and a corresponding decoder may directly decode the stereo audio, and the audio quality is basically the same as the quality of the encoded stereo. Moreover, for a device having the capability of decoding the spatial audio, only the spatial audio signal may be decoded, while on other third-party devices that do not have the capability of decoding the spatial audio, only the stereo audio may be recognized, and there will be no confusion problem of recognizing dual-track audio by the third-party device, thereby realizing multi-purpose with one stream. In addition, the audio signal processing method in the present disclosure may further choose to only decode the stereo audio, only decode the spatial audio, or completely decode the stereo audio and the spatial audio, and different contents are decoded for different situations, which is more flexible.

At least one embodiment of the present disclosure further provides an audio signal processing method, which is used to receive the code stream generated by the audio signal processing method provided by at least one embodiment of the present disclosure, and parse and decode the code stream to restore the audio signal.

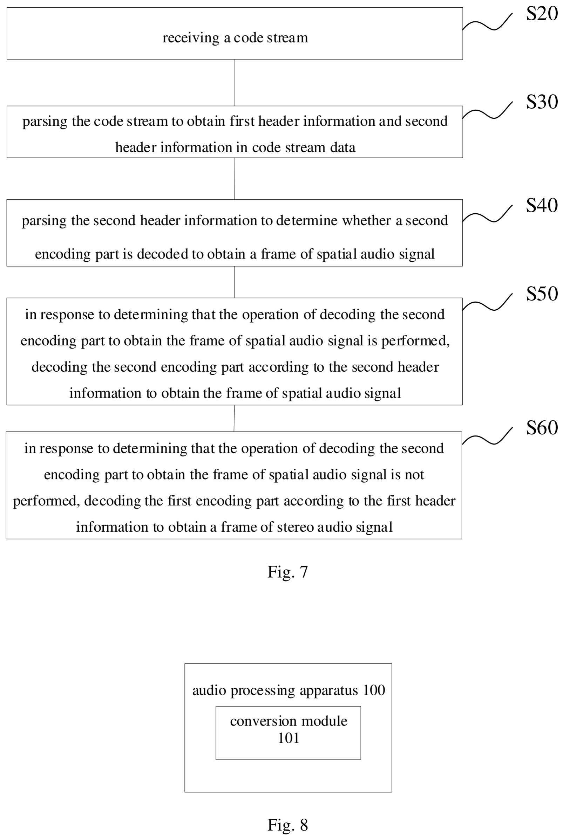

Fig. 7 is a schematic flowchart of an audio signal processing method according to at least one embodiment of the present disclosure. As shown in Fig. 7, the audio signal processing method provided by at least one embodiment of the present disclosure includes steps S20 to S60.

An execution terminal of the audio signal processing method provided by at least one embodiment of the present disclosure may be considered as a second terminal involved in an audio decoding operation, and the second terminal may preferably be a terminal related to audio services. For example, the first terminal and the second terminal may be the same or different.

In step S20, receiving a code stream.

For example, the code stream is generated by the audio signal processing method provided by the at least one embodiment described above, and for the specific process, reference may be made to the above content, which will not be repeated here.

In step S30, parsing the code stream to obtain first header information and second header information in the code stream data frame.

For the specific format of the first header information and the second header information, reference may be made to the specific content of the audio signal processing method described above, which will not be repeated here.

For example, after the first header information is parsed at the beginning, information such as the sampling rate of the current encoding load, the encoding mode, the variable bit rate flag, and the number of channels may be obtained, and the decoder is initialized.

In step S40, parsing the second header information to determine whether a second encoding part is decoded to obtain a frame of spatial audio signal.

In step S50, in response to determining that the operation of decoding the second encoding part to obtain the frame of spatial audio signal is performed, decoding the second encoding part according to the second header information to obtain the frame of spatial audio signal.

In step S60, in response to determining that the operation of decoding the second encoding part to obtain the frame of spatial audio signal is not performed, decoding the first encoding part according to the first header information to obtain a frame of stereo audio signal.

As described above, the second header information includes the first filling element flag, the first filling element length, the first filling element type, and the first filling element content, the first filling element content includes the first identification S, and the first identification S indicates whether the second encoding part is decoded to obtain the frame of spatial audio signal. For the specific format of the second header information, reference may be made to the relevant content of the audio signal processing method described above, which will not be repeated here.

For example, step S40 may include: parsing the second header information to obtain the first filling element flag; in response to the first filling element flag being a flag indicating that the first filling element content is a filling element of the code stream data frame, parsing the second header information to obtain the first filling element type; in response to recognizing that the first filling element type is a predefined first type, parsing the second header information in combination with the first filling element length obtained by parsing the second header information to obtain the second identification; in response to the second identification indicating that the code stream data frame carries the second encoding part including the encoding load corresponding to the frame of spatial audio signal, parsing the second header information to obtain the first identification; in response to the first identification indicating decoding the second encoding part, determining to perform the operation of decoding the second encoding part to obtain the frame of spatial audio signal; and in response to not recognizing the first filling element type, or the first identification indicating not to decode the second encoding part, determining not to perform the operation of decoding the second encoding part to obtain the frame of spatial audio signal.

For example, referring to the format rule of the second header information shown in Fig. 4, the second header information is parsed to obtain the first filling element flag. If the first filling element flag is ID_FIL, it represents that the second header information is encapsulated in the format of the filling element, and the parsing process of the corresponding filling element is entered.

After that, the second header information is parsed to obtain the first filling element type and the first filling element length.

If the first filling element type is not recognized, it represents that the second terminal does not have the capability of decoding the spatial audio at this time. For example, the first filling element type is the first type EXT_IPCE_DATA, but for a third-party device, this type is not defined in its EXT_PAYLOAD_TYPE, so the first filling element type cannot be recognized. At this time, it is determined that the operation of decoding the second encoding part to obtain the frame of spatial audio signal is not performed, and the first encoding part is subsequently decoded according to the first header information to obtain the stereo audio signal, thereby ensuring compatibility and basic user experience.

If the first filling element type is recognized and the first filling element type is the first type EXT_IPCE_DATA, the filling element content with the first filling element length is read, and the second identification P is parsed therefrom. Certainly, if the second identification P is not transmitted or defined, the first identification S may be directly parsed, and this step may be skipped.

If the second identification P is the first value, indicating that the code stream data frame carries the second encoding part including the encoding load corresponding to the frame of spatial audio signal, the second header information is further parsed to obtain the first identification S and the spatial audio layout representation CONFIG, otherwise, the parsing process of the second header information is jumped out.

If the first identification S indicates decoding the second encoding part, for example, the first identification S is the first value, it is determined that the operation of decoding the second encoding part to obtain the frame of spatial audio signal needs to be performed, that is, at this time, the second terminal has the capability of decoding the spatial audio, and also needs to decode the second encoding part to restore the spatial audio signal, thereby providing a more immersive experience for the user.

If the first identification S indicates not to decode the second encoding part, for example, the first identification S is the second value, it is determined that the operation of decoding the second encoding part to obtain the frame of spatial audio signal is not performed, that is, at this time, the second terminal has the capability of decoding the spatial audio, but requires not to decode the second encoding part, and the first encoding part is still decoded subsequently according to the first header information to obtain the stereo audio signal. Therefore, flexible decoding requirement control may be performed through the first identification S.

For example, in some other embodiments, the decoder may modify and set the first identification S, for example, the decoder may override the original value of the first identification S as needed, and then may perform the subsequent decoding process based on the new first identification S. The decoder may set and select to decode the first encoding part or the second encoding part according to its own needs. Therefore, flexible decoding requirement control may be further performed on the decoder side through the first identification S.

For example, if it is determined that the operation of decoding the second encoding part to obtain the frame of the spatial audio signal is performed, the decoder re-initializes the decoder according to the spatial audio layout identification to generate a decoding environment for the corresponding spatial audio signal, and skips the code stream parsing of the stereo audio signal. Alternatively, the code stream parsing of the stereo audio signal is still performed, but the stereo audio signal is not decoded by the decoder, and the audio feature of the stereo audio signal is overridden by the audio feature of the spatial audio signal when the spatial audio signal is parsed.

For example, if it is determined that the operation of decoding the second encoding part to obtain the frame of spatial audio signal is performed, step S50 may include: determining the audio channel layout of the frame of spatial audio signal according to the spatial audio layout identification in the second header information; initializing the decoder according to the audio channel layout; and parsing the second encoding part and decoding the second encoding part by using the decoder to obtain the frame of spatial audio signal.

For example, in this embodiment, it has been determined that the operation of decoding the second encoding part to obtain the frame of spatial audio signal is performed, therefore, the second encoding part may include at least one second encoding structure encapsulated in the format of the filling element, and each second encoding structure includes the second filling element flag, the second filling element length, the second filling element type, and the second filling element content. Parsing the second encoding part and decoding the second encoding part by using the decoder to obtain the frame of spatial audio signal may include: for each second encoding structure, parsing the second encoding structure to obtain the second filling element flag; in response to the second filling element flag being a flag indicating that the second filling element content is the filling element of the code stream data frame, parsing the second encoding structure to obtain the second filling element length and the second filling element type; and in response to recognizing that the second filling element type is a predefined second type, parsing the second filling element content with the second filling element length in the second encoding structure to obtain the audio feature for restoring the audio signal by using the decoder.

For example, when it is determined to decode the second encoding part, the decoder is first initialized according to the audio channel layout indicated by the spatial audio layout identification.

After that, each second encoding structure is parsed. For example, referring to the second encoding structure shown in Fig. 5, the second filling element flag is first obtained. If the second filling element flag is ID_FIL, it represents that the second encoding structure is encapsulated in the format of the filling element, and the parsing process of the corresponding filling element is entered.

After that, the second encoding structure is parsed to obtain the second filling element type and the second filling element length.

If the second filling element type is recognized and the second filling element type is the second type EXT_SA_DATA, the filling element content with the second filling element length is read as the encoding load part, and the second filling element content with the second filling element length in the second encoding structure is parsed to obtain the audio feature for restoring the audio signal by using the decoder. For example, after parsing at least one second encoding structure, the audio feature is obtained. For example, different parameters of the audio feature, such as envelope energy and harmonic components, are obtained from different second encoding structures. The obtained audio feature is decoded by using the decoder to realize the restoration of the audio signal, thereby obtaining the frame of spatial audio signal.

In this case, since it has been determined in step S40 that the second encoding part may be decoded, it represents that this step is executed by the second terminal having the capability of decoding the spatial audio, and the second filling element type may certainly be recognized. For the scenario where the second filling element type is other than the second type, if the decoder may still decode the filling element content in the case of being re-initialized, the corresponding decoding operation is still performed, which will not be repeated here.

For example, if it is determined that the operation of decoding the second encoding part to obtain the frame of spatial audio signal is not performed, the decoder is used to perform conventional decoding of the first encoding part to restore the stereo audio.

For example, step S60 may include: initializing the decoder according to the first header information; decoding the first encoding part by using the decoder to obtain the frame of stereo audio signal; parsing each second encoding structure in the second encoding part, and in response to not recognizing the second filling element type in the second encoding structure, or recognizing the second filling element type in the second encoding structure and the second filling element type being the second type, determining to discard the second filling element content with the second filling element length in the second encoding structure; and in response to recognizing the second filling element type in the second encoding structure and the second filling element type not being the second type, performing the corresponding decoding process on the second filling element content according to the second filling element type.

For the decoding of the first encoding part, the current way of decoding stereo audio may be adopted, which will not be repeated here.

At this time, for the second encoding part, since the code stream is parsed sequentially, the parsing of the second encoding part will still be entered, for example, parsing each second encoding structure sequentially.

The second encoding structure includes a code stream element flag, and the code stream element flag may be a flag ID_FIL indicating that the second filling element content is the filling element of the code stream data frame. Certainly, the code stream element flag may also be a flag indicating other extension elements, such as ID_DSE and ID_PCE.

If the code stream element flag is the flag ID_FIL indicating that the second filling element content is the filling element of the code stream data frame, the second encoding structure further includes the second filling element type, the second filling element length, and the second filling element content.

Referring to the content as described above, first, for each code stream structure, the code stream element flag in the second encoding structure is parsed out. If the code stream element flag is ID_FIL, it represents that the second encoding structure is encapsulated in the format of the filling element, and the parsing process of the corresponding filling element is entered.

The second filling element length and the second filling element type are obtained by parsing. If the second filling element type is not recognized, for example, the second filling element type is the second type EXT_SA_DATA, but for a third-party device, this type is not defined in its EXT_PAYLOAD_TYPE, so the second filling element type cannot be recognized. At this time, it is determined to discard the second filling element content with the second filling element length in the second encoding structure.

If the second filling element type is recognized and the second filling element type is the second type EXT_SA_DATA, the first identification S is read. Since it has been determined in step S40 that the second encoding part is not decoded, at this time, the first identification S should be the second value, indicating that the second encoding part is not decoded, that is, the audio signal is not restored from the encoding load in the second encoding part, and it is determined to discard the second filling element content with the second filling element length in the second encoding structure. For example, at this time, the second terminal has the capability of decoding the spatial audio, but requires not to decode the second encoding part, so the second filling element content is discarded.

For example, if the second filling element type is recognized and the second filling element type is not the second type EXT_SA_DATA, for example, is a data type known in EXT_PAYLOAD_TYPE, the corresponding decoding process is performed on the second filling element content according to the data type, which will not be repeated here. At this time, the operation of decoding the second encoding part to obtain the frame of spatial audio signal is not performed, but other decoding processes for the extended information of the stereo audio may be performed.

If the code stream element flag is not ID_FIL, for example, is ID_PCE, the corresponding parsing process is performed according to the code stream element flag, and the specific process is consistent with that of the conventional decoder, which will not be repeated here. At this time, the operation of decoding the second encoding part to obtain the frame of spatial audio signal is not performed, but other decoding processes for the extended information of the stereo audio may be performed.

The execution process of the audio signal processing method provided by at least one embodiment of the present disclosure is specifically described below for different types of second terminals.

For example, in some embodiments, for a second terminal with the spatial audio decoding capability, for example, it has a modified AAC encoder and may decode spatial audio.

For the second terminal as described above, after receiving a code stream data frame, the second terminal first parses the first header information to obtain information such as the sampling rate, the AAC encoding mode, the variable bit rate flag, and the number of channels, and initializes the decoder.

After that, after the parsing of the first header information is completed, the decoder parses the second header information to obtain the first filling element flag. If the first filling element flag is ID_FIL, according to the encapsulation format of ID_FIL, the parsing process of the filling element is entered.

In this parsing process, the first filling element length and the first filling element type are first obtained by parsing. If the first filling element type is EXT_IPCE_DATA, the first filling element content with the first filling element length is read, and the second identification P is parsed therefrom. If the second identification P is the first value, the second header information is further parsed to obtain the first identification S and the spatial audio layout identification CONFIG, and if the second identification P is the second value, the parsing process of the second header information is jumped out.

If the first identification S is the second value, it is determined that the operation of decoding the second encoding part to obtain the frame of spatial audio signal is not performed, and the first encoding part is decoded according to the first header information to restore the stereo audio signal.

If the first identification S is the first value, it is determined that the operation of decoding the second encoding part to obtain the frame of spatial audio signal is performed, the audio channel layout of the frame of spatial audio signal is determined according to the spatial audio layout identification CONFIG, the decoder is initialized according to the audio channel layout, the code stream parsing of the stereo audio signal is skipped, and the second encoding part is parsed to decode the second encoding part by using the decoder to obtain the frame of spatial audio signal.

When parsing the second encoding part, for each second encoding structure, the code stream element flag is first obtained by parsing.

If the code stream element flag is the end-of-code-stream flag, it indicates that the code stream has been completely parsed, and the decoding process is ended. Otherwise, different extended information parsing is performed according to the second filling element flag.

If the code stream element flag is the filling element flag ID_FIL, the parsing process of the corresponding encapsulation format is executed, including reading the second filling element length and the second filling element type.

If the second filling element type is EXT_SA_DATA, it indicates that the second filling element content is the encoding load corresponding to the frame of spatial audio signal, and the corresponding interface is called to parse the encoding load corresponding to the spatial audio signal to obtain the audio feature.

If the second filling element type is another data type, the corresponding decoding process is performed according to the second filling element type. For the specific process, reference may be made to the conventional decoding process of AAC, which will not be repeated here.

If the code stream element flag is another code stream element flag, the corresponding parsing process is performed according to the code stream element flag. For the specific process, reference may be made to the conventional decoding process of AAC, which will not be repeated here.

The above operations are performed for each second encoding structure until the parsing of the current code stream data frame is completed, the audio feature obtained by parsing the at least one second encoding structure is obtained, the decoding process is executed by using the decoder, and a frame of spatial audio signal is output.

For example, in some other embodiments, for a second terminal without the spatial audio decoding capability, for example, it does not have the modified AAC encoder and cannot decode spatial audio, and may only decode stereo audio.

For the second terminal as described above, after receiving a code stream data frame, the second terminal first parses the first header information to obtain information such as the sampling rate, the AAC encoding mode, the variable bit rate flag, and the number of channels, and initializes the decoder.

After that, after the parsing of the first header information is completed, the decoder parses the second header information to obtain the first filling element flag. If the first filling element flag is ID_FIL, according to the encapsulation format of ID_FIL, the parsing process of the filling element is entered.

In this parsing process, the first filling element length and the first filling element type are first obtained by parsing. At this time, since EXT_PAYLOAD_TYPE does not define EXT_IPCE_DATA, the first filling element type cannot be recognized, and the first filling element content with the first filling element length is discarded.

The first encoding part is parsed according to the first header information to obtain the audio feature for restoring the frame of the stereo audio signal by using the decoder.

After that, the second encoding part is parsed. For each second encoding structure, if the second filling element flag of the second encoding structure is ID_FIL, the second filling element length and the second filling element type are read according to the encapsulation format.

If the second filling element type is EXT_SA_DATA, since EXT_PAYLOAD_TYPE of the second terminal does not define EXT_SA_DATA, the decoder considers it an invalid load, and therefore discards the second filling element content with the second filling element length.

If the second filling element type is another data type, the corresponding decoding process is performed according to the second filling element type. For the specific process, reference may be made to the conventional decoding process of AAC, which will not be repeated here.

If the second filling element flag is another filling element flag, the corresponding parsing process is performed according to the second filling element flag. For the specific process, reference may be made to the conventional decoding process of AAC, which will not be repeated here.

The above operations are performed for each second encoding structure until the parsing of the current code stream data frame is completed, and the audio feature obtained by parsing the at least one first encoding structure is obtained. After that, the decoding process is executed by using the decoder, and a frame of stereo audio signal is output.

According to the audio signal processing method provided by at least one embodiment of the present disclosure, after receiving the code stream, whether the second encoding part is to be decoded to restore the audio signal of the spatial audio may be determined according to the second header information, and then the first encoding part or the second encoding part may be separately decoded to realize the restoration of the audio signal of the stereo audio or the spatial audio. The decoder may directly decode the stereo audio, and the audio quality is basically the same as the quality of the encoded stereo. Moreover, for a device having the capability of decoding the spatial audio, only the spatial audio signal may be decoded, while on other third-party devices that do not have the capability of decoding the spatial audio, only the stereo audio may be recognized, and there will be no confusion problem of recognizing dual-track audio by the third-party device, thereby realizing multi-purpose with one stream. In addition, the audio signal processing method in the present disclosure may further choose to only decode the stereo audio, only decode the spatial audio, or completely decode the stereo audio and the spatial audio, and different contents are decoded for different situations, which is more flexible.

At least one embodiment of the present disclosure further provides an audio signal processing apparatus. Fig. 8 is a schematic structural diagram of an audio signal processing apparatus according to at least one embodiment of the present disclosure. The audio signal processing apparatus may be suitable for the encoding processing of stereo audio and spatial audio. The apparatus may be implemented by software and/or hardware, and may be configured in a terminal and/or a server to implement the audio signal processing method in the embodiment of the present disclosure.

As shown in Fig. 8, the audio processing apparatus 100 provided by at least one embodiment of the present disclosure includes a conversion module 101.

For example, the conversion module 101 is configured to perform a conversion between an audio signal and a code stream of the audio signal, where the audio signal includes stereo audio.

For example, the code stream includes a plurality of code stream data frames, the stereo audio includes a plurality of frames of stereo audio signals, and the a plurality of code stream data frames are in a one-to-one correspondence with the a plurality of frames of stereo audio signals.

For the relevant description of the code stream data frame, the code stream, the stereo audio, and the stereo audio signal, reference may be made to the relevant description of the audio signal processing method described above, which will not be repeated here.

Each code stream data frame conforms to a format rule, and the format rule specifies that: the code stream data frame includes first header information, second header information, and frame data, the first header information includes frame header information of the code stream data frame, the frame data includes a first encoding part and a second encoding part, and the first encoding part includes an encoding load corresponding to a frame of stereo audio signal corresponding to the code stream data frame.

In response to the audio signal further including spatial audio including a plurality of frames of spatial audio signals, the format rule further specifies that the a plurality of code stream data frames are also in a one-to-one correspondence with the a plurality of frames of spatial audio signals, the second header information includes supplementary information for supplementing the frame header information and related to a frame of spatial audio signal corresponding to the code stream data frame, and the second encoding part includes an encoding load corresponding to the frame of spatial audio signal.

It should be noted that the conversion module 101 may be configured to implement step S10 shown in Fig. 2. Therefore, for the specific description of the functions that may be implemented by the conversion module 101, reference may be made to the relevant description of step S10 in the embodiment of the audio processing method described above, and thus details of the same parts are not repeated here. In addition, the audio processing apparatus 100 may achieve technical effects similar to those of the audio processing method described above, which will not be repeated here.

It should be noted that, in at least one embodiment of the present disclosure, the audio processing apparatus 100 may include more or fewer circuits or units, and the connection relationship between the circuits or units is not limited and may be determined according to actual needs. The specific configuration of each circuit or unit is not limited, and it may be composed of analog devices, digital chips, or other applicable methods according to circuit principles.

For example, the audio processing apparatus 100 may be implemented by hardware, software, or a combination of hardware and software, which is not specifically limited in the present disclosure.

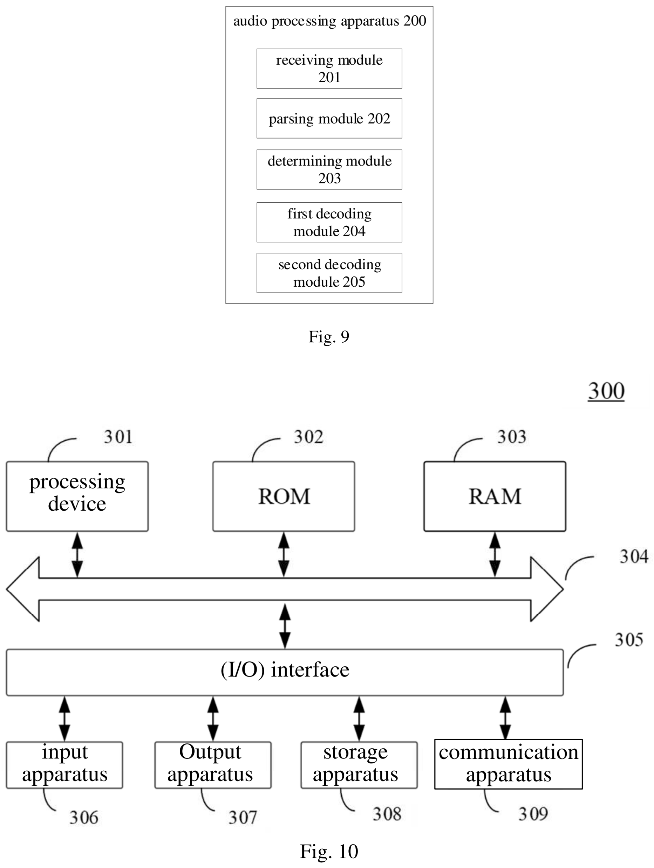

At least one embodiment of the present disclosure further provides an audio signal processing apparatus. Fig. 9 is a schematic structural diagram of an audio signal processing apparatus according to at least one embodiment of the present disclosure. The audio signal processing apparatus may be suitable for the decoding processing of stereo audio and spatial audio. The apparatus may be implemented by software and/or hardware, and may be configured in a terminal and/or a server to implement the audio signal processing method in the embodiment of the present disclosure.

As shown in Fig. 9, the audio processing apparatus 200 provided by at least one embodiment of the present disclosure includes a receiving module 201, a parsing module 202, a determining module 203, a first decoding module 204, and a second decoding module 205.

For example, the receiving module 201 is configured to receive a code stream, and the code stream is generated with reference to the audio processing method provided by at least one embodiment of the present disclosure.

The parsing module 202 is configured to parse the code stream to obtain first header information and second header information in the code stream data frame.

The determining module 203 is configured to parse the second header information to determine whether a second encoding part is decoded to obtain a frame of spatial audio signal.

The first decoding module 204 is configured to, in response to determining that an operation of decoding the second encoding part to obtain the frame of spatial audio signal is performed, decode the second encoding part according to the second header information to obtain the frame of spatial audio signal.

The second decoding module 205 is configured to, in response to determining that the operation of decoding the second encoding part to obtain the frame of spatial audio signal is not performed, decode a first encoding part according to the first header information to obtain a frame of stereo audio signal.

It should be noted that the receiving module 201 may be configured to implement step S20 shown in Fig. 7, the parsing module 202 may be configured to implement step S30 shown in Fig. 7, the determining module 203 may be configured to implement step S40 shown in Fig. 7, the first decoding module 204 may be configured to implement step S50 shown in Fig. 7, and the second decoding module 205 may be configured to implement step S60 shown in Fig. 7. Therefore, for the specific description of the functions that may be implemented by the receiving module 201, reference may be made to the relevant description of step S20 in the embodiment of the audio processing method described above, for the specific description of the functions that may be implemented by the parsing module 202, reference may be made to the relevant description of step S30 in the embodiment of the audio processing method described above, for the specific description of the functions that may be implemented by the determining module 203, reference may be made to the relevant description of step S40 in the embodiment of the audio processing method described above, for the specific description of the functions that may be implemented by the first decoding module 204, reference may be made to the relevant description of step S50 in the embodiment of the audio processing method described above, and for the specific description of the functions that may be implemented by the second decoding module 205, reference may be made to the relevant description of step S60 in the embodiment of the audio processing method described above, and thus details of the same parts are not repeated here. In addition, the audio processing apparatus 200 may achieve technical effects similar to those of the audio processing method described above, which will not be repeated here.

Fig. 10 is a schematic block diagram of an electronic device according to an embodiment of the present disclosure. As shown in Fig. 10, the electronic device 300 is, for example, suitable for implementing the audio processing method provided by the embodiment of the present disclosure. It should be noted that the components of the electronic device 300 shown in Fig. 10 are only exemplary and non-limiting, and the electronic device 300 may further have other components according to actual application needs.

As shown in Fig. 10, the electronic device 300 may include a processing apparatus (e.g., a graphics processor, a central processing unit, etc.) 301, which may perform various appropriate actions and processing according to non-transitory computer-readable instructions stored in a memory to implement various functions.

For example, when the computer-readable instructions are run by the processing apparatus 301, one or more steps in the audio processing method according to any one of the embodiments described above may be executed. It should be noted that for the detailed description of the processing procedure of the audio processing method, reference may be made to the relevant description in the embodiment of the audio processing method described above.

For example, the central processing unit in the electronic device may be configured as a control end to schedule and control the graphics processor when performing image processing. For example, the central processing unit is responsible for processing complex logical operations and overall control, while the graphics processor focuses on graphics processing and data parallel computing.

For example, the memory may include any combination of one or more computer program products, which may include various forms of computer-readable storage media, such as volatile memory and/or non-volatile memory. The volatile memory may include, for example, a random-access memory (RAM) 303 and/or a cache memory (cache), etc. For example, the computer-readable instructions may be loaded from a storage apparatus 308 into the random-access memory (RAM) 303 to run the computer-readable instructions. The non-volatile memory may include, for example, a read-only memory (ROM) 302, a hard disk, an erasable programmable read-only memory (EPROM), a portable compact disk read-only memory (CD-ROM), a USB memory, a flash memory, etc. Various applications and various data, such as various data used and/or generated by the applications, may also be stored in the computer-readable storage medium.

For example, the processing apparatus 301, the ROM 302, and the RAM 303 are connected to each other through a bus 304. An input/output (I/O) interface 305 is also connected to the bus 304.

Generally, the following apparatuses may be connected to the I/O interface 305: an input apparatus 306 including, for example, a touch screen, a touchpad, a keyboard, a mouse, a camera, a microphone, an accelerometer, a gyroscope, etc.; an output apparatus 307 including, for example, a liquid crystal display (LCD), a speaker, a vibrator, etc.; the storage apparatus 308 including, for example, a magnetic tape, a hard disk, a flash memory, etc.; and a communication apparatus 309. The communication apparatus 309 may allow the electronic device 300 to perform wireless or wired communication with other electronic devices to exchange data. Although Fig. 10 shows the electronic device 300 having various apparatuses, it should be understood that it is not required to implement or have all of the apparatuses shown, and the electronic device 300 may alternatively implement or have more or fewer apparatuses. For example, the processing apparatus 301 may control other components in the electronic device 300 to perform desired functions. The processing apparatus 301 may be a central processing unit (CPU), a tensor processing unit (TPU), a graphics processing unit (GPU), or other devices with data processing capability and/or program execution capability. The central processing unit (CPU) may have an X86, ARM, or RISC-V architecture, etc. The GPU may be directly integrated into a system on chip (SOC), directly integrated onto a main board, or built into a northbridge chip of the main board.

For example, the electronic device 300 may be disposed on a server side (or a cloud side).

For example, in some embodiments, the electronic device 300 may be a mobile phone, a tablet computer, an electronic paper, a television, a display, a laptop computer, a digital photo frame, a navigator, a wearable electronic device, a smart home device, etc.

For example, the electronic device 300 may include a display panel, which may be used for dividing images, etc. For example, the display panel may be a rectangular panel, a circular panel, an elliptical panel, or a polygonal panel, etc. In addition, the display panel may be not only a flat panel, but also a curved panel or even a spherical panel.

For example, the electronic device 300 may have a touch function, that is, the electronic device 300 may be a touch apparatus.

The flowcharts and block diagrams in the drawings illustrate the possibly implemented architectures, functions, and operations of the system, the method, and the computer program product according to various embodiments of the present disclosure. In this regard, each block in the flowchart or block diagram may represent a module, program segment, or part of code, which includes one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. Among them, the name of a unit does not constitute a limitation on the unit itself under certain circumstances.

The functions described above may be at least partially performed by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logical device (CPLD), and more.

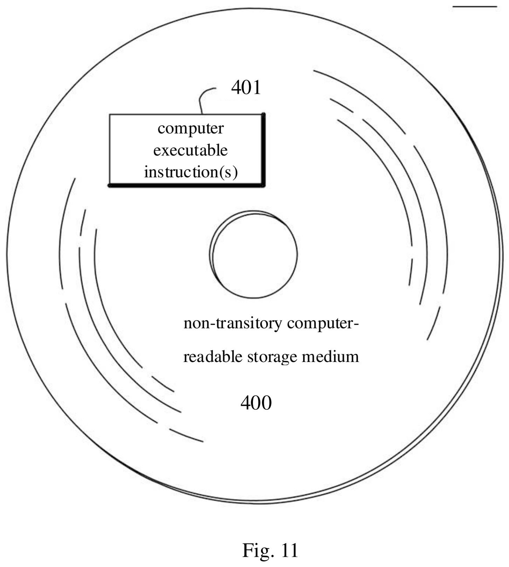

Fig. 11 is a schematic diagram of a non-transitory computer-readable storage medium according to at least one embodiment of the present disclosure. For example, as shown in Fig. 11, the storage medium 400 may be a non-transitory computer-readable storage medium, and one or more computer-readable instructions 401 may be stored on the storage medium 400 in a non-transitory manner. For example, when the computer-readable instructions 401 are executed by a processor, one or more steps in the audio processing method according to the above description may be executed.

For example, the storage medium 400 may be applied to the electronic device 300, and for example, the storage medium 400 may include the storage apparatus 308 in the electronic device 300.

For example, the storage apparatus may include any combination of one or more computer program products, which may include various forms of computer-readable storage media, such as volatile memory and/or non-volatile memory. The volatile memory may include, for example, a random access memory (RAM) and/or a cache memory (cache), etc. The non-volatile memory may include, for example, a read-only memory (ROM), a hard disk, an erasable programmable read-only memory (EPROM), a portable compact disk read-only memory (CD-ROM), a USB memory, a flash memory, etc. One or more computer-readable instructions may be stored on the computer-readable storage medium, and the processor may run the computer-readable instructions to implement various functions of the processor. Various applications, various data, etc. may also be stored in the storage medium.

For example, the storage medium may include a memory card of a smartphone, a cache component of a tablet computer, a hard disk of a personal computer, a random access memory (RAM), a read-only memory (ROM), an erasable programmable read-only memory (EPROM), a portable compact disk read-only memory (CD-ROM), a flash memory, or any combination of the above storage media, or other suitable storage media.

In some implementations, clients and servers may communicate using any currently known or future developed network protocol, such as HTTP (HyperText Transfer Protocol), and may be interconnected with any form or medium of digital data communication (for example, a communication network). Examples of the communication network include a local area network ("LAN"), a wide area network ("WAN"), an Internet, a peer-to-peer network (for example, an Ad-Hoc network), and any network currently known or to be developed in the future.

The computer-readable medium may be contained in the computer device or may exist alone without being assembled into the computer device.

The computer-readable medium carries one or more programs that, when executed by the computer device, cause the computer device to:
The computer program code for performing the operations of the present disclosure may be written in one or more programming languages or a combination thereof. The programming languages include object-oriented programming languages such as Java, Smalltalk, and C++, and may also include general procedural programming languages such as "C" language or similar programming languages. The program code may be executed entirely on a user computer, partly on the user computer, as a stand-alone software package, partly on the user computer and partly on a remote computer, or entirely on the remote computer or server. In the case of involving the remote computer, the remote computer may be connected to the user computer through any kind of network, including a local area network (LAN) or a wide area network (WAN), or may be connected to an external computer (for example, connected by using Internet provided by an Internet service provider).

According to one or more embodiments of the present disclosure, Example 1 provides an audio signal processing method, including: performing conversion between an audio signal and a code stream of the audio signal, where the audio signal includes stereo audio; where the code stream includes a plurality of code stream data frames, the stereo audio includes a plurality of frames of stereo audio signals, the a plurality of code stream data frames are in a one-to-one correspondence with the a plurality of frames of stereo audio signals, each code stream data frame conforms to a format rule, and the format rule specifies that: the code stream data frame includes first header information, second header information, and frame data, the first header information includes frame header information of the code stream data frame, the frame data includes a first encoding part and a second encoding part, and the first encoding part includes an encoding load corresponding to a frame of stereo audio signal corresponding to the code stream data frame; and where in response to the audio signal further including spatial audio including a plurality of frames of spatial audio signals, the format rule further specifies that the a plurality of code stream data frames are also in a one-to-one correspondence with the a plurality of frames of spatial audio signals, the second header information includes supplementary information for supplementing the frame header information and related to a frame of spatial audio signal corresponding to the code stream data frame, and the second encoding part includes an encoding load corresponding to the frame of spatial audio signal.

According to one or more embodiments of the present disclosure, Example 2 provides the audio signal processing method of Example 1, where the format rule further specifies that the second encoding part and the second header information are both encapsulated in a format indicating serving as an extension part of the code stream data frame.

According to one or more embodiments of the present disclosure, Example 3 provides the audio signal processing method of Example 2, where the format indicating serving as the extension part of the code stream data frame specifies that the extension part is encapsulated in a format of a filling element, and a code structure encapsulated in the format of the filling element comprises a filling element flag, a filling element length, a filling element type, and filling element content; wherein, the filling element length indicates a length of the filling element content, and the filling element flag and the filling element type jointly indicate a data type of the filling element content.

According to one or more embodiments of the present disclosure, Example 4 provides the audio signal processing method of Example 3, where the second header information encapsulated in the format of the filling element comprises a first filling element flag and a first filling element type, and the second encoding part encapsulated in the format of the filling element comprises a second filling element flag and a second filling element type; the format rule further specifies that the first filling element type is different from the second filling element type, and the first filling element flag is a same as the second filling element flag.

According to one or more embodiments of the present disclosure, Example 5 provides the audio signal processing method of Example 3, where the format rule specifies that the second header information encapsulated in the format of the filling element includes the first filling element flag, a first filling element length, the first filling element type, and first filling element content, the first filling element type is a first type, the first filling element flag is a flag indicating that the first filling element content is a filling element of the code stream data frame, and the first filling element content includes a first identification and a spatial audio layout identification, the first identification indicating whether the second encoding part is decoded to obtain the frame of spatial audio signal, and the spatial audio layout identification being used to indicate an audio channel layout of the frame of spatial audio signal; and the first filling element content further includes a second identification indicating whether the code stream data frame carries the second encoding part including the encoding load corresponding to the frame of spatial audio signal.

According to one or more embodiments of the present disclosure, Example 6 provides the audio signal processing method of Example 3, where the format rule further specifies that the second encoding part encapsulated in the format of the filling element includes at least one second encoding structure, each second encoding structure includes a second filling element flag, a second filling element length, a second filling element type, and second filling element content, the second filling element type in the at least one second encoding structure is a second type, the second filling element flag in the at least one second encoding structure is a flag indicating that the second filling element content is the filling element of the code stream data frame, and the encoding load corresponding to the frame of spatial audio signal includes at least one encoding load part in a one-to-one correspondence with the at least one second encoding structure; and the second filling element content in each second encoding structure includes the encoding load part corresponding to the second encoding structure.

According to one or more embodiments of the present disclosure, Example 7 provides the audio signal processing method of Example 1, where the format rule further specifies that the first encoding part includes at least one first encoding structure, the encoding load corresponding to the frame of stereo audio signal includes at least one encoding load part in a one-to-one correspondence with the at least one first encoding structure, each first encoding structure includes a flag and an encoding load part corresponding to the first encoding structure, and the flag indicates a code stream element type of the encoding load part.

According to one or more embodiments of the present disclosure, Example 8 provides the audio signal processing method of Example 1, where in the code stream data frame, the first header information, the second header information, the first encoding part, and the second encoding part are arranged in this order.

According to one or more embodiments of the present disclosure, Example 9 provides the audio signal processing method of Example 1, where in response to the audio signal not comprising the spatial audio, the second encoding part comprises extended information of the frame of stereo audio signal, and the second header information is encapsulated in a format indicating serving as an extension part of the code stream data frame.

According to one or more embodiments of the present disclosure, Example 10 provides the audio signal processing method of Example 1, where performing the conversion includes encoding the audio signal into the code stream.

According to one or more embodiments of the present disclosure, Example 11 provides the audio signal processing method of Example 1, where performing the conversion includes decoding the audio signal from the code stream.

According to one or more embodiments of the present disclosure, Example 12 provides an audio signal processing method, including: receiving the code stream generated according to the audio signal processing method described in any one of Example 1 to Example 12; parsing the code stream to obtain the first header information and the second header information in the code stream data frame; parsing the second header information to determine whether to decode the second encoding part to obtain the frame of spatial audio signal; in response to determining to perform an operation of decoding the second encoding part to obtain the frame of spatial audio signal, decoding the second encoding part according to the second header information to obtain the frame of spatial audio signal; and in response to determining not to perform the operation of decoding the second encoding part to obtain the frame of spatial audio signal, decoding the first encoding part according to the first header information to obtain the frame of stereo audio signal.

According to one or more embodiments of the present disclosure, Example 13 provides the audio signal processing method of Example 12, where the second header information includes a first filling element flag, a first filling element length, a first filling element type, and first filling element content, the first filling element content includes a first identification and a second identification, the first identification indicates whether the second encoding part is decoded to obtain the frame of spatial audio signal, and the second identification indicates whether the code stream data frame carries the second encoding part including the encoding load corresponding to the frame of spatial audio signal; and parsing the second header information to determine whether to decode the second encoding part to obtain the frame of spatial audio signal includes: parsing the second header information to obtain the first filling element flag; in response to the first filling element flag being a flag indicating that the first filling element content is a filling element of the code stream data frame, parsing the second header information to obtain the first filling element type; in response to recognizing that the first filling element type is a predefined first type, parsing the second header information in combination with the first filling element length obtained by parsing the second header information to obtain the second identification; in response to the second identification indicating that the code stream data frame carries the second encoding part including the encoding load corresponding to the frame of spatial audio signal, parsing the second header information to obtain the first identification; in response to the first identification indicating decoding the second encoding part, determining to perform the operation of decoding the second encoding part to obtain the frame of spatial audio signal; and in response to not recognizing the first filling element type, or the first identification indicating not to decode the second encoding part, determining not to perform the operation of decoding the second encoding part to obtain the frame of spatial audio signal.

According to one or more embodiments of the present disclosure, Example 14 provides the audio signal processing method of Example 12, where the second header information includes first filling element content, the first filling element content includes a spatial audio layout identification, and the spatial audio layout identification is used to indicate an audio channel layout of the frame of spatial audio signal; and decoding the second encoding part according to the second header information to obtain the frame of spatial audio signal includes: determining the audio channel layout of the frame of spatial audio signal according to the spatial audio layout identification in the second header information; initializing a decoder according to the audio channel layout; and parsing the second encoding part to decode the second encoding part by using the decoder to obtain the frame of spatial audio signal.

According to one or more embodiments of the present disclosure, Example 15 provides the audio signal processing method of Example 12, where the second encoding part includes at least one second encoding structure encapsulated in the format of the filling element, each second encoding structure includes the second filling element flag, a second filling element length, a second filling element type, and second filling element content, and parsing the second encoding part to decode the second encoding part by using the decoder to obtain the frame of spatial audio signal includes: for each second encoding structure, parsing the second encoding structure to obtain the second filling element flag; in response to the second filling element flag being a flag indicating that the second filling element content is the filling element of the code stream data frame, parsing the second encoding structure to obtain the second filling element length and the second filling element type; and in response to recognizing that the second filling element type is a predefined second type, parsing the second filling element content with the second filling element length in the second encoding structure to obtain an audio feature for decoding the audio feature by using the decoder to restore the frame of spatial audio signal.

According to one or more embodiments of the present disclosure, Example 16 provides the audio signal processing method of Example 12, where the second encoding part includes at least one second encoding structure, each second encoding structure includes a code stream element flag, and in response to the code stream element flag being a flag indicating that the second filling element content is the filling element of the code stream data frame, the second encoding structure further includes a second filling element type, a second filling element length, and second filling element content, and decoding the first encoding part according to the first header information to obtain the frame of stereo audio signal includes: initializing a decoder according to the first header information; parsing the first encoding part to obtain an audio feature of the frame of stereo audio signal for decoding the audio feature by using the decoder to restore the frame of stereo audio signal; and parsing each second encoding structure in the second encoding part, and for each second encoding structure: obtaining the second filling element flag by parsing, and in response to the second filling element flag of the second encoding structure being a flag indicating that the second filling element content is the filling element of the code stream data frame: in response to not recognizing the second filling element type in the second encoding structure, or recognizing the second filling element type in the second encoding structure and the second filling element type being the second type, determining to discard the second filling element content with the second filling element length in the second encoding structure, and in response to recognizing the second filling element type in the second encoding structure and the second filling element type not being the second type, performing the corresponding decoding process on the second filling element content according to the second filling element type.

According to one or more embodiments of the present disclosure, Example 17 provides an audio signal processing apparatus, including: a conversion module configured to perform conversion between an audio signal and a code stream of the audio signal, where the audio signal includes stereo audio; where the code stream includes a plurality of code stream data frames, the stereo audio includes a plurality of frames of stereo audio signals, the a plurality of code stream data frames are in a one-to-one correspondence with the a plurality of frames of stereo audio signals, each code stream data frame conforms to a format rule, and the format rule specifies that the code stream data frame includes first header information, second header information, and frame data, the first header information includes frame header information of the code stream data frame, the frame data includes a first encoding part and a second encoding part, and the first encoding part includes an encoding load corresponding to a frame of stereo audio signal corresponding to the code stream data frame; and where in response to the audio signal further including spatial audio including a plurality of frames of spatial audio signals, the format rule further specifies that the a plurality of code stream data frames are also in a one-to-one correspondence with the a plurality of frames of spatial audio signals, the second header information includes supplementary information for supplementing the frame header information and related to a frame of spatial audio signal corresponding to the code stream data frame, and the second encoding part includes an encoding load corresponding to the frame of spatial audio signal.

According to one or more embodiments of the present disclosure, Example 18 provides an audio signal processing apparatus, including: a receiving module configured to receive the code stream generated according to the audio signal processing method described in any one of examples 1 to 11; a parsing module configured to parse the code stream to obtain the first header information and the second header information in the code stream data frame; a determining module configured to parse the second header information to determine whether to decode the second encoding part to obtain the frame of spatial audio signal; a first decoding module configured to, in response to determining to perform an operation of decoding the second encoding part to obtain the frame of spatial audio signal, decode the second encoding part according to the second header information to obtain the frame of spatial audio signal; and a second decoding module configured to, in response to determining not to perform the operation of decoding the second encoding part to obtain the frame of spatial audio signal, decode the first encoding part according to the first header information to obtain the frame of stereo audio signal.

According to one or more embodiments of the present disclosure, Example 19 provides an electronic device, including: a memory storing computer-executable instructions in a non-transitory manner; and a processor configured to run the computer-executable instructions, where when the computer-executable instructions are run by the processor, the audio signal processing method according to any one of Example 1 to Example 16 is implemented.

According to one or more embodiments of the present disclosure, Example 20 provides a non-transitory computer-readable storage medium, where the non-transitory computer-readable storage medium stores computer-executable instructions, and when the computer-executable instructions are executed by a processor, the audio signal processing method according to any one of Example 1 to Example 16 is implemented.

The above description is only preferred embodiments of the present disclosure and an explanation of the applied technical principles. Those skilled in the art should understand that the disclosure scope involved in the present disclosure is not limited to the technical solutions formed by the specific combination of the above technical features, and should also cover other technical solutions formed by any combination of the above technical features or their equivalent features without departing from the above disclosure concept. For example, a technical solution formed by replacing the above features with technical features with similar functions disclosed in the present disclosure (but not limited thereto).

Furthermore, although the operations are depicted in a particular order, this should not be understood as requiring the operations to be performed in the particular order shown or in a sequential order. Under certain circumstances, multitasking and parallel processing may be advantageous. Likewise, although the above discussion contains a number of specific implementation details, these should not be construed as limiting the scope of the present disclosure. Certain features described in the context of separate embodiments may also be implemented in a single embodiment in combination. Conversely, various features described in the context of a single embodiment may also be implemented in a plurality of embodiments individually or in any suitable sub-combination.

Although the subject matter has been described in language specific to structural features and/or logical actions of the method, it should be understood that the subject matter defined in the appended claims is not necessarily limited to the specific features or actions described above. On the contrary, the specific features and actions described above are only exemplary forms for implementing the claims.

For the present disclosure, the following points further need to be noted:
(1) The drawings of the embodiments of the present disclosure only relate to the structures involved in the embodiments of the present disclosure, and for other structures, reference may be made to general designs.
(2) The embodiments of the present disclosure and the features in the embodiments may be combined with each other without conflict to obtain new embodiments.

The above description is only specific implementations of the present disclosure, but is not intended to limit the protection scope of the present disclosure. The protection scope of the present disclosure shall be subject to the protection scope of the claims.

## Claims

1. An audio signal processing method, comprising:
(S10) performing a conversion between an audio signal and a code stream of the audio signal, wherein the audio signal comprises stereo audio;
wherein the code stream comprises a plurality of code stream data frames, the stereo audio comprises a plurality of frames of stereo audio signals, and the plurality of code stream data frames are in a one-to-one correspondence with the plurality of frames of stereo audio signals;
each code stream data frame conforms to a format rule, and the format rule specifies that: the code stream data frame comprises first header information, second header information, and frame data, the first header information comprises frame header information of the code stream data frame, the frame data comprises a first encoding part and a second encoding part, and the first encoding part comprises an encoding load corresponding to a frame of stereo audio signal corresponding to the code stream data frame; and
wherein, in response to the audio signal further comprising spatial audio that comprises a plurality of frames of spatial audio signals, the format rule further specifies that the plurality of code stream data frames are also in a one-to-one correspondence with the plurality of frames of spatial audio signals, the second header information comprises supplementary information for supplementing the frame header information and related to a frame of spatial audio signal corresponding to the code stream data frame, and the second encoding part comprises an encoding load corresponding to the frame of spatial audio signal.

2. The method of claim 1, wherein the format rule further specifies that the second encoding part and the second header information are both encapsulated in a format indicating serving as an extension part of the code stream data frame.

3. The method of claim 2, wherein the format indicating serving as the extension part of the code stream data frame specifies that the extension part is encapsulated in a format of a filling element, and a code structure encapsulated in the format of the filling element comprises a filling element flag, a filling element length, a filling element type, and filling element content;
wherein, the filling element length indicates a length of the filling element content, and the filling element flag and the filling element type jointly indicate a data type of the filling element content.

4. The method of claim 3, wherein the second header information encapsulated in the format of the filling element comprises a first filling element flag and a first filling element type, and the second encoding part encapsulated in the format of the filling element comprises a second filling element flag and a second filling element type;
the format rule further specifies that the first filling element type is different from the second filling element type, and the first filling element flag is a same as the second filling element flag.

5. The method of claim 3, wherein the format rule further specifies that the second header information encapsulated in the format of the filling element comprises a first filling element flag, a first filling element length, a first filling element type, and first filling element content;
the first filling element type is a first type;
the first filling element flag is a flag indicating that the first filling element content is the filling element of the code stream data frame;
the first filling element content comprises a first identification and a spatial audio layout identification;
the first identification indicates whether the second encoding part is decoded to obtain the frame of spatial audio signal;
the spatial audio layout identification is used to indicate an audio channel layout of the frame of spatial audio signal;
the first filling element content further comprises a second identification; and
the second identification indicates whether the code stream data frame carries the second encoding part comprising the encoding load corresponding to the frame of spatial audio signal.

6. The method of claim 3, wherein the format rule further specifies that the second encoding part encapsulated in the format of the filling element comprises at least one second encoding structure, and each second encoding structure comprises a second filling element flag, a second filling element length, a second filling element type, and second filling element content;
the second filling element type in the at least one second encoding structure is a second type;
the second filling element flag in the at least one second encoding structure is a flag indicating that the second filling element content is a filling element of the code stream data frame;
the encoding load corresponding to the frame of spatial audio signal comprises at least one encoding load part in a one-to-one correspondence with the at least one second encoding structure; and
the second filling element content in each second encoding structure comprises the encoding load part corresponding to the second encoding structure.

7. The method of any one of claims 1-6, wherein in the code stream data frame, the first header information, the second header information, the first encoding part, and the second encoding part are arranged in a following order:
the first header information, the second header information, the first encoding part, and the second encoding part;
optionally, wherein in response to the audio signal not comprising the spatial audio, the second encoding part comprises extended information of the frame of stereo audio signal, and the second header information is encapsulated in a format indicating serving as an extension part of the code stream data frame.

8. The method of any one of claims 1-7, wherein performing the conversion comprises encoding the audio signal into the code stream.

9. The method of any one of claims 1-7, wherein performing the conversion comprises decoding the audio signal from the code stream.

10. An audio signal processing method, comprising:
(S20) receiving the code stream generated according to the audio signal processing method of any of claims 1 to 9;
(S30) parsing the code stream to obtain the first header information and the second header information in the code stream data frame;
(S40) parsing the second header information to determine whether to decode the second encoding part to obtain the frame of spatial audio signal;
(S50) in response to determining to perform an operation of decoding the second encoding part to obtain the frame of spatial audio signal, decoding the second encoding part according to the second header information to obtain the frame of spatial audio signal; and
(S60) in response to determining not to perform the operation of decoding the second encoding part to obtain the frame of spatial audio signal, decoding the first encoding part according to the first header information to obtain the frame of stereo audio signal.

11. The method of claim 10, wherein the second header information comprises a first filling element flag, a first filling element length, a first filling element type, and first filling element content;
the first filling element content comprises a first identification and a second identification, the first identification indicates whether the second encoding part is decoded to obtain the frame of spatial audio signal, and the second identification indicates whether the code stream data frame carries the second encoding part comprising the encoding load corresponding to the frame of spatial audio signal; and
parsing the second header information to determine whether to decode the second encoding part to obtain the frame of spatial audio signal comprises:
parsing the second header information to obtain the first filling element flag;
in response to the first filling element flag being a flag indicating that the first filling element content is a filling element of the code stream data frame, parsing the second header information to obtain the first filling element type;
in response to recognizing that the first filling element type is a predefined first type, parsing the second header information in combination with the first filling element length obtained by parsing the second header information to obtain the second identification;
in response to the second identification indicating that the code stream data frame carries the second encoding part comprising the encoding load corresponding to the frame of spatial audio signal, parsing the second header information to obtain the first identification;
in response to the first identification indicating decoding the second encoding part, determining to perform the operation of decoding the second encoding part to obtain the frame of spatial audio signal; and
in response to not recognizing the first filling element type, or the first identification indicating not to decode the second encoding part, determining not to perform the operation of decoding the second encoding part to obtain the frame of spatial audio signal.

12. The method of claim 10, wherein the second header information comprises first filling element content, the first filling element content comprises a spatial audio layout identification, and the spatial audio layout identification is used to indicate an audio channel layout of the frame of spatial audio signal; and
decoding the second encoding part according to the second header information to obtain the frame of spatial audio signal comprises:
determining the audio channel layout of the frame of spatial audio signal according to the spatial audio layout identification in the second header information;
initializing a decoder according to the audio channel layout; and
parsing the second encoding part to decode the second encoding part by using the decoder to obtain the frame of spatial audio signal;
optionally, wherein the second encoding part comprises at least one second encoding structure encapsulated in the format of a filling element, each second encoding structure comprises a second filling element flag, a second filling element length, a second filling element type, and second filling element content, and
parsing the second encoding part to decode the second encoding part by using the decoder to obtain the frame of spatial audio signal comprises:
for each second encoding structure, parsing the second encoding structure to obtain the second filling element flag;
in response to the second filling element flag being a flag indicating that the second filling element content is the filling element of the code stream data frame, parsing the second encoding structure to obtain the second filling element length and the second filling element type; and
in response to recognizing that the second filling element type is a predefined second type, parsing the second filling element content with the second filling element length in the second encoding structure to obtain an audio feature for decoding the audio feature by using the decoder to restore the frame of spatial audio signal.

13. The method of claim 10, wherein the second encoding part comprises at least one second encoding structure, and each second encoding structure comprises a code stream element flag;
in response to the code stream element flag being a flag indicating that second filling element content is a filling element of the code stream data frame, the second encoding structure further comprises a second filling element type, a second filling element length, and the second filling element content; and
decoding the first encoding part according to the first header information to obtain the frame of stereo audio signal comprises:
initializing a decoder according to the first header information;
parsing the first encoding part to obtain an audio feature of the frame of stereo audio signal for decoding the audio feature by using the decoder to restore the frame of stereo audio signal; and
parsing each second encoding structure in the second encoding part, and for each second encoding structure:
parsing the second encoding structure to obtain the code stream element flag, and in response to the code stream element flag of the second encoding structure being a flag indicating that the second filling element content is the filling element of the code stream data frame:
in response to not recognizing the second filling element type in the second encoding structure, or recognizing the second filling element type in the second encoding structure and the second filling element type being a second type, determining to discard the second filling element content with the second filling element length in the second encoding structure; and
in response to recognizing the second filling element type in the second encoding structure and the second filling element type not being the second type, performing a corresponding decoding process on the second filling element content according to the second filling element type.

14. An electronic device (300), comprising:
a memory storing computer-executable instructions in a non-transitory manner; and
a processor (301) configured to run the computer-executable instructions,
wherein, when the computer-executable instructions are run by the processor, the audio signal processing method of any one of claims 1-13 is implemented.

15. A non-transitory computer-readable storage medium (400), wherein the non-transitory computer-readable storage medium stores computer-executable instructions (401), and
when the computer-executable instructions (401) are executed by a processor, the audio signal processing method of any one of claims 1-13 is implemented.
